(19) **Europäisches Patentamt / European Patent Office / Office européen des brevets**

(11) **EP 4 284 612 B1**

(12) **FASCICULE DE BREVET EUROPEEN**

(45) Date de publication et mention de la délivrance du brevet:
**18.03.2026 Bulletin 2026/12**

(21) Numéro de dépôt: **22705439.2**

(22) Date de dépôt: **27.01.2022**

(51) Classification Internationale des Brevets (IPC):
**B28B 11/24** *(2006.01)* **C04B 35/624** *(2006.01)*
**C04B 35/626** *(2006.01)* **F16D 69/02** *(2006.01)*
**F26B 3/04** *(2006.01)* **F26B 9/06** *(2006.01)*
**F26B 21/06** *(2006.01)* **F26B 21/08** *(2006.01)*
**C04B 35/83** *(2006.01)*

(52) Classification Coopérative des Brevets (CPC):
**B28B 11/243; C04B 35/624; C04B 35/62655; C04B 35/83; F16D 69/023; F26B 3/04; F26B 9/06; F26B 21/30; F26B 21/333**

(86) Numéro de dépôt international:
**PCT/FR2022/050154**

(87) Numéro de publication internationale:
**WO 2022/162319 (04.08.2022 Gazette 2022/31)**

(54) **PROCEDE DE SECHAGE D'UNE EBAUCHE IMPREGNEE ET PROCEDE DE FABRICATION ASSOCIE**

**VERFAHREN ZUM TROCKNEN EINES IMPRÄGNIERTEN ROHLINGS SOWIE ZUGEHÖRIGES HERSTELLUNGSVERFAHREN**

**METHOD FOR DRYING AN IMPREGNATED BLANK AND ASSOCIATED MANUFACTURING METHOD**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.01.2021 FR 2100898**

(43) Date de publication de la demande:
**06.12.2023 Bulletin 2023/49**

(73) Titulaire: **Safran Landing Systems**
**78140 Vélizy-Villacoublay (FR)**

(72) Inventeurs:
• **BRENDER, Patrice**
**77550 Moissy-Cramayel (FR)**
• **PETITJEAN, Olivier**
**77550 Moissy-Cramayel (FR)**
• **RETHORE, Amélie**
**77550 Moissy-Cramayel (FR)**
• **MAURIGE, Olivier**
**77550 Moissy-Cramayel (FR)**

(74) Mandataire: **Regimbeau**
**20, rue de Chazelles**
**75847 Paris Cedex 17 (FR)**

(56) Documents cités:
| | |
|---|---|
| EP-A2- 2 058 613 | EP-A2- 2 058 613 |
| DE-U1- 202008 013 487 | DE-U1- 202008 013 487 |
| FR-A1- 2 844 510 | FR-A1- 2 844 510 |
| FR-A1- 2 851 244 | FR-A1- 2 851 244 |
| US-A- 5 513 447 | US-A- 5 513 447 |

**Description**

## DOMAINE DE L'INVENTION

L'invention concerne le séchage d'une ébauche de pièce à base de matériau composite carbone/carbone imprégnée.

L'invention concerne un procédé de séchage d'une ébauche de pièce à base de matériau composite carbone/carbone imprégnée et un procédé de fabrication d'une pièce à base de matériau composite carbone/carbone associé.

## ETAT DE LA TECHNIQUE

On connaît des pièces à base de matériau(x) composite carbone/carbone (C/C)

Il peut s'agir par exemple de pièces de friction telles que des disques de freins d'avions, mais il peut s'agir d'autres applications et/ou d'autres pièces en matériau composite C/C, notamment celles pour lesquelles des propriétés mécaniques améliorées sont recherchées. Des disques de freins d'avions en matériau composite C/C sont largement utilisés. La fabrication de tels disques comporte habituellement une étape de réalisation d'une préforme fibreuse en fibres de carbone ayant une forme voisine de celle d'un disque à fabriquer et destinée à constituer le renfort fibreux du matériau composite, et une étape de densification de la préforme par une matrice en carbone pyrolytique (PyC) pour former une ébauche. Un procédé bien connu pour la réalisation d'une préforme fibreuse en fibres de carbone comprend la superposition de strates fibreuses en fibres de précurseur de carbone, par exemple en polyacrylonitrile (PAN) préoxydé, la liaison des strates entre elles, par exemple par aiguilletage, et la réalisation d'un traitement thermique de carbonisation pour transformer le précurseur en carbone. On pourra se référer, entre autres, au document US 5 792 715.

La densification de la préforme par une matrice en PyC peut être effectuée par infiltration chimique en phase gazeuse ou CVI ("Chemical Vapour Infiltration"). Des préformes sont placées dans une enceinte dans laquelle est admise une phase gazeuse contenant un ou plusieurs précurseurs de carbone, par exemple du méthane et/ou du propane. La température et la pression dans l'enceinte sont contrôlées pour permettre à la phase gazeuse de diffuser au sein des préformes et d'y former un dépôt solide de carbone pyrolytique par décomposition du ou des précurseurs. Un procédé de densification d'une pluralité de préformes annulaires de disques de frein disposées en piles est décrit, entre autres, dans le document US 5 904 957.

La densification par une matrice carbone peut aussi être effectuée par voie liquide, c'est-à-dire par imprégnation de la préforme par un précurseur de carbone, typiquement une résine, et pyrolyse du précurseur, plusieurs cycles d'imprégnation et pyrolyse étant habituellement réalisés.

On connaît aussi un procédé de densification dit par "caléfaction" selon lequel une préforme de disque à densifier est immergée dans un bain de précurseur de carbone, par exemple du toluène, et est chauffée, par exemple par couplage avec un inducteur, de sorte que le précurseur vaporisé au contact de la préforme diffuse au sein de celle-ci pour former un dépôt PyC par décomposition. Un tel procédé est décrit entre autres dans le document US 5 389 152.

Parmi les différentes propriétés recherchées de disques de frein à base de matériau composite C/C, une faible usure est hautement désirable. Pour améliorer la résistance à l'usure, l'introduction de grains en céramique dans le matériau composite C/C a été largement proposée. Ainsi, dans le document US 6 376 431, il est décrit l'imprégnation d'une ébauche en fibres de carbone par une solution de type sol-gel contenant un précurseur de silice ($SiO_2$) qui, après traitement thermique et réaction chimique avec le carbone, laisse des grains de carbure de silicium (SiC) distribués dans l'ébauche, ces grains ne représentant, dans le matériau composite C/C final, pas plus de 1 % en poids.

Le document WO 2006/067184 préconise de réaliser une imprégnation par une solution type sol-gel ou suspension colloïdale sur la texture fibreuse des strates utilisées pour réaliser l'ébauche afin d'obtenir une dispersion de grains d'oxydes tels que des oxydes de titane ($TiO_2$), de zirconium ($ZrO_2$), d'hafnium ($HfO_2$) et de silicium ($SiO_2$). Un traitement thermique ultérieur transforme ces grains d'oxyde en grains de carbure. Le document EP 1 748 036 décrit l'imprégnation d'un substrat en fibres de carbone par une barbotine contenant une résine précurseur de carbone et des grains d'oxyde métallique, par exemple $SiO_2$, $TiO_2$, $ZrO_2$, .... Après traitement thermique, un matériau composite C/C est obtenu contenant des grains de carbure obtenus par transformation des particules d'oxydes. Les exemples indiquent l'utilisation de grains d'oxyde de plusieurs microns. Le document EP 0 507 564 décrit la réalisation d'une pièce en matériau composite type C/C par mélange de fibres carbonées, de poudre céramique et de poudre de carbone, moulage et frittage, la poudre céramique étant par exemple un oxyde tel que $SiO_2$, $TiO_2$, $ZrO_2$, ou un nitrure. L'utilisation de poudre de $ZrO_2$ formée de grains d'un micron est mentionnée en exemple 2, la quantité de $ZrO_2$ dans le matériau composite final étant de 6,2 %. On note que, parmi les poudres céramiques envisagées, $ZrO_2$ est loin de donner les meilleurs résultats en usure. Le document EP 0 404 571 décrit un procédé similaire à celui de EP 0 507 564 mais pour former une pièce de glissement à faible coefficient de frottement.

On connaît en particulier des méthodes permettant la fabrication de pièces à propriétés améliorées comprenant l'ajout de charges céramiques au sein d'une ébauche carbonée en composite carbone/carbone (C/C), dans lesquelles des charges sont introduites via un procédé d'imprégnation-séchage par un sol contenant les particules de céramique. Le procédé est décrit dans la demande de brevet FR 2 945 529. Un tel procédé permet d'obtenir des propriétés mécaniques améliorées, ce qui présente un intérêt particulier pour des pièces à base de matériau composite C/C quelle que soit leur destination.

Cependant, lors de la mise en œuvre de ces méthodes, il est très difficile d'obtenir une répartition homogène des particules au sein de l'ébauche, résultant en un gradient de charges dans l'épaisseur du matériau. Ces charges sont typiquement réparties de la manière suivante pour une pièce, par exemple une pièce de friction : une quantité importante de charges est présente au voisinage des faces, par exemple des faces frottantes, alors que seule une quantité réduite de charges est présente introduite au cœur de l'ébauche.

Cette répartition atypique des charges génère des risques liés entre autres à une variabilité des propriétés tribologiques au cours de la durée de vie de la pièce, par exemple en fonction de son niveau d'usure, une usure de faces pouvant être observée. Par exemple au niveau d'une pièce de friction, une usure des faces frottantes de l'ordre de plusieurs millimètres peut être observée lors de la vie du frein. Les documents DE 20 2008 013 487 U1, EP 2 058 613 A2 divulguent d'autres procédés pour le séchage d'ébauches. FR 2851244A1 décrit la gélification d'un précurseur de matériau réfractaire ainsi qu'un procédé de séchage d'une ébauche de pièce à base de matériau composite carbone/carbone imprégnée d'une solution de type sol-gel, la solution comprenant un solvant et un ou plusieurs composés, dans un système formant étuve, le système comprenant une chambre configurée pour recevoir l'ébauche, le procédé comprenant des étapes de:

-   gélification de la solution de sorte à former un gel au sein de l'ébauche disposée dans la chambre par chauffage de la chambre, et
-   séchage du gel au sein de l'ébauche par chauffage.

**EXPOSE DE L'INVENTION**

L'invention vise ainsi en particulier à résoudre les problèmes de répartition de charges au sein d'une pièce dont la fabrication comprend l'ajout de charges céramiques au sein d'une ébauche carbonée en composite carbone/carbone (C/C). L'invention vise à réduire les risques de variabilité des propriétés tribologiques de telles pièces au cours de leur durée de vie.

Il est à cet effet proposé un procédé de séchage d'une ébauche de pièce à base de matériau composite carbone/carbone imprégnée d'une solution de type sol-gel, la solution comprenant un solvant et un ou plusieurs composés, dans un système formant étuve, le système comprenant :

-   une chambre configurée pour recevoir l'ébauche,

-   des moyens de circulation de gaz configurés pour permettre de manière sélective la circulation d'un gaz entre une sortie de gaz de la chambre et une entrée de gaz de la chambre,
-   des moyens de désaturation de gaz étant configurés pour permettre de manière sélective la désaturation au moins partielle du gaz en solvant,

le procédé comprenant des étapes de :

-   gélification de la solution de sorte à former un gel au sein de l'ébauche disposée dans la chambre par chauffage de la chambre, les moyens de circulation et les moyens de désaturation étant désactivés, de sorte à limiter la circulation et la désaturation du gaz en solvant, et
-   séchage du gel au sein de l'ébauche par chauffage, les moyens de circulation et les moyens de désaturation étant activés, de sorte à permettre la circulation et la désaturation du gaz en solvant.

Le procédé peut être complété par les caractéristiques suivantes, prises seules ou selon l'une quelconque de leurs combinaisons techniquement possibles :

-   préalablement à l'étape de gélification, une étape de montée en température, les moyens de circulation étant activés et les moyens de désaturation étant désactivés, de sorte à permettre la montée en température en limitant la désaturation du gaz en solvant,
-   la chambre comprend des moyens de chauffage dédiés, configurés pour chauffer de manière sélective la chambre, par exemple indépendamment de l'état des moyens de circulation de gaz, les moyens de chauffage de la chambre étant activés durant les étapes de gélification et de séchage, et par exemple activés durant l'étape de montée en température, les moyens de chauffage de la chambre comprenant par exemple une double enveloppe de la chambre,
-   les moyens de circulation de gaz comprenant des moyens de chauffage dédiés, configurés pour chauffer de manière sélective le gaz circulant entre la sortie de gaz et l'entrée de gaz, les moyens de chauffage des moyens de circulation étant désactivés durant l'étape de gélification et activés durant l'étape de séchage, et par exemple activés durant l'étape de montée en température,

-   l'étape de séchage comprend une sous-étape de montée en température et une sous-étape postérieure de maintien en température, l'étape de séchage étant par exemple suivie d'une étape de refroidissement dans laquelle les moyens de circulation, et par exemple les moyens de chauffage de la chambre et/ou les moyens de chauffage des moyens de circulations, sont désactivés,
-   les moyens de circulation de gaz comprennent un circuit de circulation de gaz s'étendant entre la sortie de gaz et l'entrée de gaz, le circuit de circulation comprenant un ventilateur configuré pour permettre de manière sélective la circulation d'un gaz entre la sortie de gaz de la chambre et l'entrée de gaz de la chambre, les moyens de chauffage des moyens de circulation comprenant par exemple un réchauffeur configuré pour réchauffer le gaz circulant au sein des moyens de circulation, le réchauffeur étant par exemple disposés entre le ventilateur et l'entrée de gaz,

- les moyens de désaturation de gaz comprennent un circuit de désaturation de gaz comprenant :

    - une vanne configurée pour permettre de manière sélective la circulation du gaz au sein du circuit de désaturation de gaz, et
    - un condenseur configuré pour permettre la condensation du solvant présent au sein du gaz circulant au sein du circuit de désaturation de gaz, et la fourniture de gaz désaturée par le circuit de désaturation de gaz,

- le circuit de désaturation de gaz est connecté fluidiquement à la chambre via le circuit de circulation de gaz, le circuit de désaturation de gaz comprenant par exemple une entrée et une sortie dédiées, l'entrée du circuit de désaturation de gaz étant disposée en amont de la sortie du circuit de désaturation de gaz au niveau du circuit de circulation de gaz de sorte à former une dérivation, l'entrée et la sortie du circuit de désaturation de gaz étant par exemple disposées en amont du ventilateur et/ou du réchauffeur.

L'invention concerne également un procédé de fabrication d'une pièce à base de matériau composite carbone/carbone comprenant des étapes de :

- fourniture ou obtention d'une ébauche de pièce à base de matériau composite carbone/carbone imprégnée d'une solution de type sol-gel au sein d'un système formant étuve, et
- séchage de l'ébauche comprenant le procédé de séchage.

**DESCRIPTION DES FIGURES**

D'autres caractéristiques, buts et avantages de l'invention ressortiront de la description qui suit, qui est purement illustrative et non limitative, et qui doit être lue en regard des dessins annexés sur lesquels :

- la figure 1 représente schématiquement un système formant étuve,
- la figure 2 représente schématiquement un procédé de séchage selon un exemple de mode de réalisation de l'invention,
- la figure 3 représente schématiquement un procédé de fabrication selon un exemple de mode de réalisation de l'invention,
- la figure 4 représente schématiquement un ensemble de fabrication,
- la figure 5 représente sous forme de graphique un exemple de durée de réaction pour que la solution de type sol-gel atteigne une viscosité donnée.
- La figure 6 représente graphiquement l'évolution de la température en en fonction du temps lors d'un procédé de séchage selon un exemple de mode de réalisation de l'invention.
- La figure 7 représente sous forme d'histogramme l'impact du procédé de séchage selon un exemple de mode de réalisation de l'invention par rapport à l'art antérieur.

Sur l'ensemble des figures, les éléments similaires portent des références identiques.

**DESCRIPTION DETAILLEE DE L'INVENTION**

Système

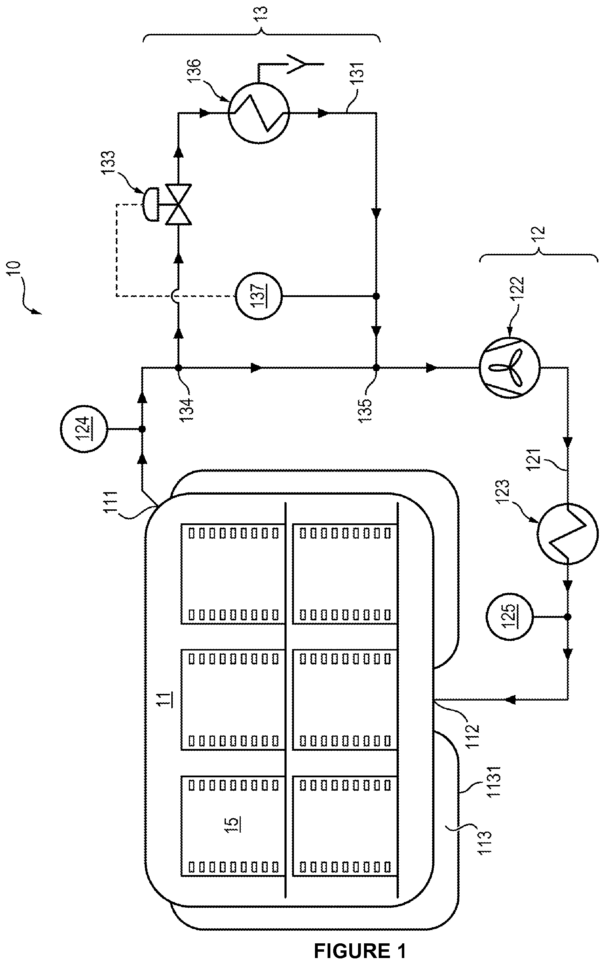

En référence à la figure 1, il est décrit un exemple de système 10, par exemple de système formant étuve, pour mettre en œuvre le procédé de séchage tel que décrit ci-après.
Le système 10 comprend une chambre 11 configurée pour recevoir une ébauche 15 de pièce à base de matériau composite carbone/carbone imprégnée d'une solution de type sol-gel. La chambre comprend une sortie 111 de gaz et une entrée 112 de gaz.
Le système 10 comprend des moyens de circulation 12 de gaz. Les moyens de circulation 12 sont configurés pour permettre, par exemple de manière sélective, la circulation d'un gaz entre la sortie 111 de gaz de la chambre et l'entrée 112 de gaz de la chambre. Les moyens de circulation 12 peuvent par exemple être sélectivement activés ou désactivés.
Le système 10 comprend des moyens de désaturation 13 de gaz. Les moyens de désaturation 13 de gaz sont configurés pour permettre de manière sélective la désaturation au moins partielle du gaz en solvant. Les moyens de désaturation 13 peuvent par exemple être sélectivement activés ou désactivés.

Ensemble

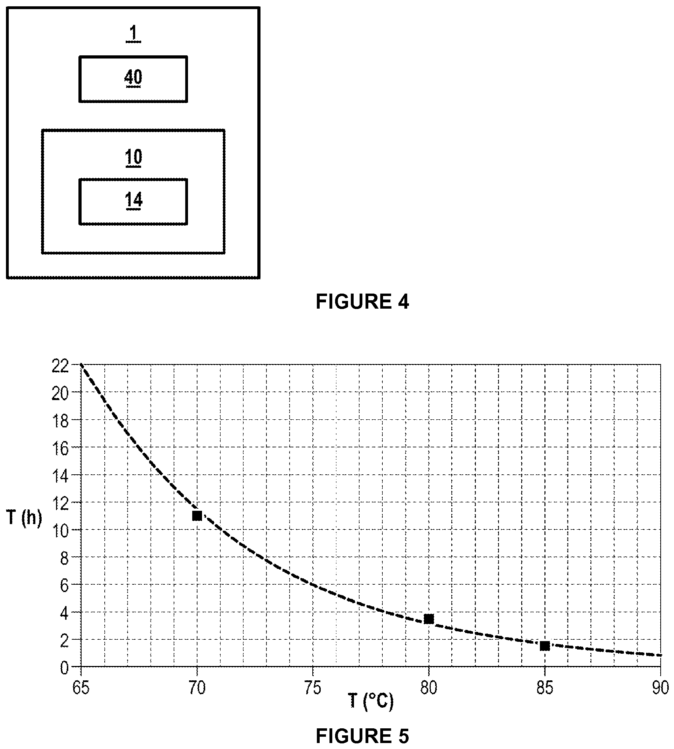

En référence à la figure 4, il est décrit un ensemble 1 de fabrication d'une pièce à base de matériau composite carbone/carbone. L'ensemble comprend le système 10.
L'ensemble 1 peut en outre comprendre des moyens d'obtention 40, par exemple une unité d'obtention, d'ébauche de pièce à base de matériau composite carbone/carbone imprégnée d'une solution de type sol-gel au sein du système 10 formant étuve.

## Moyens de commande

Le système 10 formant étuve et/ou l'ensemble 1 peut comprendre des moyens de commande 14 du système 10 formant étuve ou de l'ensemble 1, par exemple un système de commande comprenant une ou plusieurs unité(s) de commande, les moyens de commande 14 comprenant des moyens de traitement de données configurés pour mettre en œuvre le procédé de séchage et/ou le procédé de fabrication tel(s) que décrit(s) ci-après. Les moyens de traitement de données peuvent comprendre une ou plusieurs unité(s) de traitement de données. Les moyens de traitement de données et/ou la ou les unité(s) de traitement de données peu(ven)t comprendre un ou plusieurs processeurs.

Les moyens de commande 14 peuvent par exemple mettre en œuvre un contrôle de la température, par exemple la température mesurée au niveau d'un premier capteur de température et/ou d'un deuxième capteur de température tels que décrits ci-après.

## Procédé de séchage

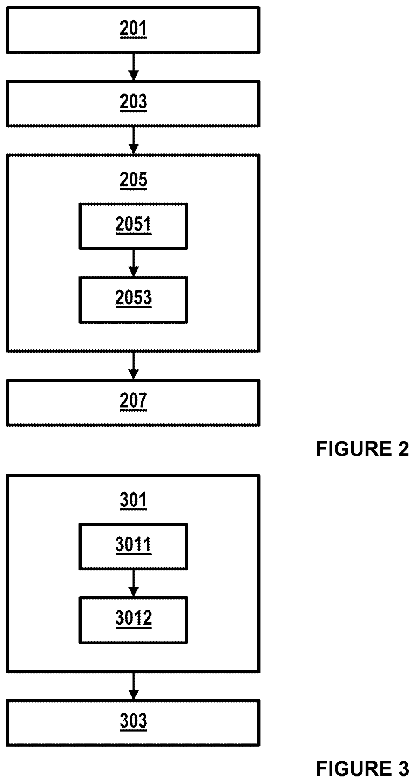

En référence à la figure 2, il est décrit un exemple de procédé de séchage d'au moins une ébauche 15 de pièce à base de matériau composite carbone/carbone imprégnée d'une solution de type sol-gel, par exemple plusieurs telles ébauches 15 imprégnées, dans un système 10 formant étuve.

La solution comprend un solvant et un ou plusieurs composés.

Le procédé de séchage comprend une étape de gélification 203 de la solution de sorte à former un gel au sein de l'ébauche 15 disposée dans la chambre par chauffage de la chambre. Au cours de l'étape de gélification 203, les moyens de circulation 12 et les moyens de désaturation sont désactivés, de sorte à limiter la circulation et la désaturation du gaz en solvant.

Le procédé de séchage comprend une étape de séchage 205 du gel au sein de l'ébauche 15, par exemple disposée dans la chambre, par chauffage. Au cours de l'étape de séchage 205, les moyens de circulation 12 et les moyens de désaturation 13 sont activés, de sorte à permettre la circulation et la désaturation du gaz en solvant.

Un tel procédé de séchage permet de résoudre les problèmes de répartition de charge, et en particulier le problème de présence d'un important gradient de charges.

Dans les procédés de l'art antérieur, les macromolécules de précurseur(s) étant de taille nanométrique, elles sont transportées par le solvant lors de son évaporation, et les particules présentes à cœur migrent partiellement vers la périphérie de l'ébauche, via un phénomène de transport en milieu poreux.

Le procédé proposé permet de décroitre la mobilité des macromolécules de précurseur(s) afin de réduire le gradient de distribution de charges. En effet, une réduction de la mobilité des macromolécules est ici réalisée par une augmentation de leur taille, c'est-à-dire une augmentation du degré de polymérisation, induite par une augmentation de température tout en limitant l'évaporation en limitant la circulation et la désaturation du gaz. Cette augmentation du degré de polymérisation entraîne une augmentation de la viscosité du sol ou gélification de la solution.

En effet, la solution de type sol-gel forme une solution comprenant des composés. Au fur et à mesure de son vieillissement, induit par la température, ces composés vont progressivement réagir entre eux pour former un réseau tridimensionnel et provoquer une gélification.

Le procédé de séchage peut comprendre en outre, préalablement à l'étape de gélification 203, une étape de montée en température 201.

## Ebauche de pièce et pièce

L'ébauche de pièce présente par exemple une forme de disque.

L'ébauche de pièce est par exemple une ébauche de pièce de friction, par exemple de disque de frein, par exemple de disque de frein d'avion, ou de pièce pour une autre application et/ou d'une autre pièce en matériau composite C/C, par exemple un disque de frein pour véhicule terrestre, par exemple des automobiles, par exemple une automobile de course, et des pièces de friction autres que des disques, notamment des patins.

Ainsi, la pièce est par exemple une pièce de friction, par exemple un disque de frein, par exemple un disque de frein d'avion, ou une pièce pour une autre application et/ou une autre pièce en matériau composite C/C.

L'ébauche de pièce peut être une ébauche fibreuse, par exemple en fibres de carbone. L'ébauche de pièce peut être configurée pour constituer un renfort fibreux d'un matériau composite de la pièce.

L'ébauche de pièce peut comprendre une superposition de strates fibreuses, les strates fibreuses étant par exemple liées entre elles, par exemple par aiguilletage. L'ébauche de pièce peut être obtenue par une étape d'obtention d'ébauche telle que décrite ci-après.

## Solution de type sol/gel

La solution peut comprendre un solvant et un ou plusieurs composés.

Le solvant peut comprendre ou être un solvant à base d'alcool. Le solvant peut comprendre ou être du butanol et/ou de l'éthanol, par exemple un mélange de butanol et d'éthanol.

Le ou les composé(s) peu(ven)t être ou comprendre un ou des précurseur(s), par exemple précurseur(s) de céramique, par exemple un ou des précurseur(s) de silice ($SiO_2$), et/ou d'oxyde de titane (TiO2), et/ou d'oxyde zirconium (ZrO2), et/ou d'oxyde d'hafnium (HfO2). Il sera ainsi possible de former des grains de carbure de silicium (SiC) et/ou de carbure de titane et/ou de carbure de zirconium et/ou de carbure d'hafnium, distribués dans l'ébauche.

La solution peut comprendre en outre un agent chélatant, permettant par exemple de contrôler la cinétique de gélification.

La solution peut comprendre un agent d'hydrolyse, par exemple de l'eau.

Chambre

La chambre 11 peut comprendre des moyens de chauffage 113 dédiés. Les moyens de chauffage 113 de la chambre sont par exemple dits premiers moyens de chauffage 113. Les moyens de chauffage 113 de la chambre peuvent être configurés pour chauffer de manière sélective la chambre 11, par exemple indépendamment de l'état des moyens de circulation 12 de gaz, par exemple indépendamment du fait que les moyens de circulation soient activés ou désactivés et/ou indépendamment du fait que des moyens de chauffage des moyens des moyens de circulation, décrits ci-après soient activés ou désactivés.

Les moyens de chauffage 113 de la chambre peuvent être activés durant l'étape de gélification 203. Les moyens de chauffage 113 de la chambre peuvent en outre être activés durant les étapes de séchage 205, et/ou de montée en température 201, de sorte à accélérer les étapes respectives et d'accélérer le procédé.

Les moyens de chauffage 113 de la chambre peuvent comprendre une double enveloppe 1131 de la chambre.

Les ébauches 15 de pièce imprégnées sont par exemple positionnées en pile dans la chambre 11.

La chambre 11 forme par exemple une enceinte. Le système 10 comprend par une cuve comprenant la chambre 11.

L'entrée 112 de la chambre peut être adaptée pour permettre l'injection de gaz depuis les moyens de circulation 12. L'entrée 112 de la chambre peut être positionnée au niveau d'une partie inférieure de la chambre 11, par exemple au fond de l'enceinte. La sortie 111 de la chambre peut être positionnée dans une partie supérieure de la chambre 11, par exemple une partie supérieure de l'enceinte, par exemple au niveau d'un sommet d'enceinte.

Moyens de circulation

Les moyens de circulation 12 de gaz peuvent comprendre des moyens de chauffage 123 dédiés. Les moyens de chauffage 123 des moyens de circulation sont par exemple dits deuxièmes moyens de chauffage. Les moyens de chauffage 123 des moyens de circulation peuvent être configurés pour chauffer de manière sélective le gaz circulant entre la sortie 111 de gaz et l'entrée 112 de gaz, par exemple avant l'injection du gaz dans la chambre 11.

L'activation des moyens de chauffage 123 des moyens de circulation peut dépendre de l'état des moyens de circulation 12. Par exemple, les moyens de chauffage 123 des moyens de circulation sont désactivés lorsque les moyens de circulation 12 sont désactivés et/ou ne peuvent être activés que si les moyens de circulation 12 sont activés.

Les moyens de chauffage 123 des moyens de circulation peuvent être désactivés durant l'étape de gélification 203 et/ou activés durant l'étape de séchage 205, et/ou activés durant l'étape de montée en température 201.

Les moyens de chauffage 123 des moyens de circulation peuvent être désactivés durant l'étape de gélification 203 et activés durant l'étape de séchage 205, et par exemple activés durant l'étape de montée en température 201.

Les moyens de circulation 12 de gaz peuvent comprendre un circuit de circulation 121 de gaz s'étendant entre la sortie 111 de gaz et l'entrée 112 de gaz.

Le circuit de circulation 121 peut comprendre un ventilateur 122 configuré pour permettre de manière sélective la circulation d'un gaz entre la sortie 111 de gaz de la chambre et l'entrée 112 de gaz de la chambre. L'activation, respectivement la désactivation, du ventilateur 122 peut correspondre à l'activation, respectivement la désactivation, des moyens de circulation 12. Le ventilateur 122 peut comprendre une hélice munie de pales.

Les moyens de chauffage 123 des moyens de circulation peuvent comprendre un réchauffeur configuré pour réchauffer le gaz circulant au sein des moyens de circulation 12, le réchauffeur étant par exemple disposés entre le ventilateur et l'entrée de gaz. Le réchauffeur peut être ou comprendre un réchauffeur à serpentin, par exemple un réchauffeur comprenant un serpentin au sein duquel une vapeur, par exemple une vapeur d'eau, circule lorsque le réchauffeur est ou les moyens de chauffage 123 sont activés. Il est ainsi possible de réutiliser une vapeur produite par ailleurs, ou d'utiliser une énergie produite par ailleurs, par exemple par combustion d'hydrocarbure, l'énergie étant utilisée pour produire de la vapeur. Alternativement ou en complément, le réchauffeur est ou comprend par exemple un chauffage électrique.

Les moyens de circulation 12, par exemple le circuit de circulation 12, peu(ven)t comprendre un ou plusieurs capteur(s) de température, par exemple un premier capteur de température 124 et/ou un deuxième capteur de température 125. Le premier capteur de température 124 peut être en amont du deuxième capteur de température 125.

Le premier capteur de température 124 peut être adapté pour mesurer une température du gaz circulant au niveau de la sortie 111 de la chambre et/ou en amont des moyens de chauffage 123 et/ou entre la sortie 111 de la chambre et les moyens de chauffage 123, et/ou entre la sortie 111 de la chambre et les moyens de désaturation 13, par exemple une entrée 134 d'un circuit de désaturation tel que décrit ci-après.

Le deuxième capteur de température 125 peut être adapté pour mesurer une température du gaz en sortie des moyens de chauffage 123, par exemple circulant au niveau de l'entrée 112 de la chambre et/ou en aval des moyens de chauffage 123 et/ou entre l'entrée 112 de la chambre et les moyens de chauffage 123. Le deuxième capteur de température 125 peut être relié aux moyens de commande 14, par exemple de sorte à permettre un pilotage en température, par exemple de sorte à permettre le contrôle de la température lors de l'étape de montée en température 201 et/ou la détermination du passage à l'étape de gélification 203.

Par amont, respectivement aval, on en entend en amont, respectivement aval, suivant le sens de circulation du gaz.

Moyens de désaturation

Les moyens de désaturation 13 de gaz peuvent comprendre un circuit de désaturation 131 de gaz.

Le circuit de désaturation 131 de gaz peut être connecté fluidiquement à la chambre 11 via le circuit de circulation 121 de gaz. Le circuit de désaturation 131 de gaz peut comprendre une entrée 134 et une sortie 135 dédiées. L'entrée 134 du circuit de désaturation de gaz peut être disposée en amont de la sortie du circuit de désaturation 131 de gaz au niveau du circuit de circulation 121 de gaz de sorte à former une dérivation. L'entrée 134 et la sortie 135 du circuit de désaturation de gaz peuvent par exemple disposées en amont du ventilateur 122 et/ou du réchauffeur 123.

Le circuit de désaturation 131 de gaz peut former un circuit de dérivation, ou bypass, sélective d'une partie du circuit de circulation 121 disposée en amont des moyens de chauffage 123.

Le circuit de désaturation 131 peut comprendre une vanne 133 configurée pour permettre de manière sélective la circulation du gaz au sein du circuit de désaturation de gaz.

La vanne 133 peut par exemple permettre différents degrés d'ouverture. Le degré d'ouverture de la vanne est par exemple piloté, par exemple par les moyens de commande 14, par exemple en fonction d'un taux d'azote désaturé ou propre ciblé.

Le circuit de désaturation 131 peut comprendre un condenseur 136 configuré pour permettre la condensation du solvant présent au sein du gaz circulant au sein du circuit de désaturation de gaz, et la fourniture de gaz désaturée par le circuit de désaturation de gaz. Le condenseur 136 permet la désaturation partielle ou totale du solvant. Le condenseur 136 est par exemple configuré pour condenser le solvant présent au sein de gaz circulant entre la vanne 133 et la sortie 135. Le condenseur 136 peut comprendre une sortie d'évacuation Y du solvant condensé hors du système 10. L'activation ou ouverture, respectivement la désactivation ou fermeture, de la vanne 133 peut correspondre à l'activation, respectivement la désactivation, des moyens de désaturation 13. L'activation, respectivement la désactivation, du condenseur 136 peut correspondre à l'activation, respectivement la désactivation, des moyens de désaturation 13. L'activation ou ouverture, respectivement la désactivation ou fermeture, de la vanne 133 et l'activation, respectivement la désactivation, du condenseur 136 peuvent correspondre à l'activation, respectivement la désactivation, des moyens de désaturation 13.

Le système 10, par exemple les moyens de désaturation 13, peu(ven)t comprendre un capteur de débit 137, par exemple un transmetteur de débit, par exemple configuré pour mesurer le débit au sein du circuit de désaturation 131, par exemple entre la vanne 133 et la sortie 135, par exemple entre le condenseur 136 et la sortie 135, par exemple en aval de la vanne 133, par exemple en aval du condenseur 136, par exemple en amont de la sortie 135.

Etape de montée en température

Le procédé de séchage peut comprendre, préalablement à l'étape de gélification 203, l'étape de montée en température 201, par exemple jusqu'à un premier seuil de température.

Au cours de l'étape de montée en température 201, les moyens de circulation 12 sont activés et les moyens de désaturation 13 sont désactivés, de sorte à permettre la montée en température en limitant la désaturation du gaz en solvant, et donc l'évaporation du solvant. Il est ainsi possible de limiter le transport des macromolécules de précuseur au sein de la porosité des ébauches.

Au cours de l'étape de montée en température 201, les moyens de chauffage 113 de la chambre peuvent être activés pour permettre la montée en température.

Au cours de l'étape de montée en température 201, les moyens de chauffage 123 des moyens de circulation peuvent être activés pour permettre la montée en température.

Au cours de l'étape de montée en température 201, la température peut être pilotée, par exemple à partir de la température mesurée par le deuxième capteur de température 125, par exemple par les moyens de commande 14, jusqu'à atteindre un premier seuil de température, par exemple d'environ 75°C.

La vanne 133 peut être fermée, de sorte que le système 10 fonctionne en système fermé.

La vitesse de montée en température ou rampe de montée au premier seuil de température est par exemple déterminée en fonction de la capacité de la chambre 11 et du chargement de la chambre 11 en ébauches de pièce 15 imprégnées. La rampe est par exemple comprise entre 5 et 30°C/h, par exemple entre 10 et 25°C/h.

Etape de gélification

Au cours de l'étape de gélification 203, les moyens de chauffage 113 de la chambre peuvent être activés, par exemple pour maintenir la température au-dessus du premier seuil de température et permettre la gélification.

Au cours de l'étape de gélification 203, les moyens de chauffage 123 des moyens de circulation peuvent être désactivés, les moyens de circulation 12 étant désactivés de sorte à maintenir le gaz statique et à réduire le phénomène d'évaporation de solvants, responsable de l'apparition de gradient de distribution de charges, et car il n'est plus nécessaire d'augmenter la température comme lors de l'étape de montée en température 201.

L'étape de gélification 203 est par exemple réalisée à une température et/ou pendant une durée donnée(s) pour atteindre un seuil de gélification de la solution de type sol-gel déterminé. Le seuil de gélification est par exemple compris entre 500 et 1200 mPa.s, par exemple entre 700 et 1000 mPa.s, par exemple entre 800 et 900 mPa.s, par exemple environ 850 mPa.s.

La température est par exemple inférieure à la température d'ébullition de la solution de type sol-gel, par exemple de sorte à ne pas avoir de phénomène d'ébullition au sein de l'ébauche lors de l'étape de gélification. La température de l'étape de gélification est par exemple comprise entre le premier seuil de température et un deuxième seuil de température supérieur au premier seuil de température.

Le deuxième seuil de température de l'étape de gélification 203 est par exemple compris entre 65 et 95 °C, par exemple inférieur ou égale à 90°C et/ou supérieur ou égal à 70°C, par exemple environ 85°C, et/ou la durée de l'étape de gélification est par exemple comprise entre 22h et 1h, par exemple entre 6h et 1h30, par exemple environ 2h.

La température des premiers moyens de chauffage 113 est par exemple fixée entre 100 et 110°C, par exemple à 105°C.

Le procédé est par exemple mis en œuvre de telle manière de sorte que l'étape de montée en température 201 prend fin et/ou l'étape de gélification 203 débute lorsque le premier seuil de température est atteint, par exemple mesurée par le deuxième capteur de température 125.

Les moyens de commande 14 peuvent par exemple contrôler la température lors de l'étape de gélification.

Au cours de l'étape de gélification 203, la température peut être pilotée, par exemple à partir de la température mesurée par le premier capteur de température 124, par exemple par les moyens de commande 14, afin d'être maintenue entre le premier seuil de température et le deuxième seuil de température et/ou en fonction d'une température de consigne comprise entre le premier seuil de température et le deuxième seuil de température, pendant la durée de l'étape de gélification.

Etape de séchage

L'étape de séchage 205 peut comprendre une sous-étape de montée en température 2051. L'étape de séchage 205 peut comprendre, par exemple postérieurement à la sous-étape de montée en température 2051, une sous-étape postérieure de maintien en température 2053.

Au cours de l'étape de séchage 205, les moyens de chauffage 113 de la chambre peuvent être activés et les moyens de chauffage 123 des moyens de circulation peuvent être activés pour permettre le séchage complet des ébauches 15 de pièce, sans risque de gradient de température en raison de la gélification. En effet, un tel séchage est sans impact sur la répartition de charges, car le sol a été gélifié durant le segment 2, et de fait, la mobilité des macromolécules se trouve être nulle : le matériau résultant ne présente plus de gradient de distribution de charges.

Au cours de l'étape de séchage 205, la ou les ébauche(s) 15 de pièce peuvent être balayées par du gaz partiellement désaturé et/ou un mélange de gaz saturé et de gaz désaturé, dit gaz propre, issu des moyens de désaturation 13.

L'étape de séchage 205 peut comprendre l'ouverture de la vanne 133, le degré d'ouverture de la vanne 133 étant par exemple fonction du taux d'azote propre ciblé.

Au cours de l'étape de séchage 205, la température peut être pilotée, par exemple à partir de la température mesurée par le premier capteur de température 124, par exemple par les moyens de commande 14, par exemple suivant une consigne de température.

La sous-étape de montée en température 2051 peut comprendre une rampe de montée en température, par exemple jusqu'à atteindre un troisième seuil de température supérieur au deuxième seuil de température. Le troisième seuil de température peut être supérieur de 10 à 40°C, par exemple de 15 à 30°C, par exemple d'environ 20°C, au deuxième seuil de température. Le troisième seuil de température peut être compris entre 95 et 115°C, par exemple entre 100 et 110°C, par exemple d'environ 105°C.

La vitesse de montée en température ou rampe de montée au troisième seuil de température est par exemple déterminée en fonction de la capacité de la chambre 11 et du chargement de la chambre 11 en ébauches de pièce 15. La rampe est par exemple comprise entre 2 et 25°C/h, par exemple entre 5 et 20°C/h. La durée limitée de la montée en température permet de réduire la durée totale du cylce de séchage.

La sous-étape postérieure de maintien en température 2053 peut comprendre le maintien de la température au troisième seuil de température, par exemple entre 1h et 20h, par exemple entre 5h et 15h. La durée du maintien dépend de la quantité de solvant restant dans les ébauches 15 de pièce.

Etape de refroidissement

Postérieurement à l'étape de séchage 205, le procédé de séchage peut comprendre une étape de refroidissement 207.

Au cours de l'étape de refroidissement 207, les moyens de circulation 12 peuvent être activés, ce qui permet d'augmenter l'efficacité du refroidissement, et par exemple les moyens de chauffage 113 de la chambre et/ou les moyens de chauffage 123 des moyens de circulations, sont désactivés, ce qui permet de ne pas insérer de calorie, Au cours de l'étape de refroidissement 207, les moyens de désaturation 13 peuvent être activés, par exemple la vanne 133 étant ouverte, la condensation permettant de réduire la température du gaz .

Procédé de fabrication

En référence à la figure 3, un procédé de fabrication d'une pièce, par exemple de la pièce, à base de matériau composite carbone/carbone est décrit.

Le procédé de fabrication peut comprendre une étape de fourniture et/ou d'obtention 301 d'une ébauche 15 de pièce à base de matériau composite carbone/carbone, par exemple l'ébauche 15, imprégnée d'une solution de type sol-gel au sein d'un système 1 formant étuve, par exemple le système 1. L'étape de fourniture ou d'obtention 301 peut comprendre le positionnement des ébauches 15 de pièce imprégnées en pile dans la chambre 11.

Postérieurement à l'étape de fourniture ou d'obtention 301, le procédé peut comprendre une étape de séchage 303 de l'ébauche 15, l'étape de séchage comprenant le procédé de séchage.

L'étape d'obtention 301 d'ébauche peut comprendre une sous-étape réalisation 3011 de préforme. La sous-étape de réalisation 3011 de préforme peut comprendre une superposition de strates fibreuses, par exemple en fibres de précurseur de carbone, par exemple en polyacrylonitrile (PAN) préoxydé. La sous-étape de réalisation 3011 de préforme peut comprendre une liaison des strates fibreuses entre elles, par exemple par aiguilletage. La sous-étape de réalisation 3011 de préforme peut comprendre, par exemple postérieurement à la liaison des strates fibreuses, un traitement thermique de carbonisation pour transformer le précurseur de carbone en carbone.

L'étape d'obtention 301 d'ébauche peut comprendre, par exemple postérieurement à la sous-étape de réalisation, une sous-étape de densification 3012 de la préforme réalisée, par exemple par une matrice, par exemple par une matrice en carbone pyrolytique (PyC), de sorte à transformer la préforme en l'ébauche.

La sous-étape de densification 3012 peut être effectuée par infiltration chimique en phase gazeuse ou CVI (« Chemical Vapour Infiltration », infiltration par vapeur chimique en terminologie anglosaxonne). Au cours de la sous-étape de densification 3012 par infiltration chimique, la préforme, ou les préformes, peut être placée dans une enceinte, dans laquelle est admise une phase gazeuse contenant un ou plusieurs précurseurs de carbone, par exemple du méthane et/ou du propane. La température et la pression dans l'enceinte peuvent être contrôlées pour permettre à la phase gazeuse de diffuser au sein des préformes et d'y former un dépôt solide de carbone pyrolytique par décomposition du ou des précurseurs. Au cours de la sous-étape de densification 3012, les préformes peuvent être disposées en piles.

Alternativement, la sous-étape de densification 3012 peut être effectuée par voie liquide. La sous-étape de densification 3012 peut comprendre une imprégnation de l'ébauche par un précurseur de carbone, par exemple une résine. Postérieurement à l'imprégnation, la sous-étape de densification 3012 peut comprendre une pyrolyse du précurseur. L'imprégnation et la pyrolyse peuvent être répétées successivement une ou plusieurs fois, par exemple de sorte à former plusieurs cycles successifs d'imprégnation et pyrolyse.

Alternativement, la sous-étape de densification 3012 peut être effectuée par caléfaction. La sous-étape de densification 3012 peut comprendre l'immersion de l'ébauche dans un bain de précurseur de carbone, par exemple du toluène. La sous-étape de densification 3012 peut comprendre une étape de chauffage de l'ébauche immergée, par exemple par couplage avec un inducteur, de sorte que le précurseur au contact de l'ébauche diffuse au sein de celle-ci pour former un dépôt PyC par décomposition.

L'étape obtention 301 d'ébauche peut comprendre une sous-étape d'imprégnation 3011 d'ébauche par une solution de type sol-gel, par exemple mise en œuvre au sein de la chambre 11.

Exemple

En référence à la figure 5, il est décrit sous forme de graphique un exemple de durée de réaction pour que la solution de type sol-gel atteigne une viscosité donnée, par exemple 850 mPa.s. Le graphique de la figure 5 représente le temps t nécessaire à la gélification du sol pour atteindre une viscosité de 850 mPa.s en heures en fonction de la température de réaction T en °C.

Ce graphique résulte d'essais en laboratoire visant à définir la durée de chauffe, sans évaporation de solvant, nécessaire à l'atteinte du seuil de gélification défini.

Il est ainsi possible de définir un couple de paramètres, temps, température à appliquer notamment lors de l'étape de gélification.

La température d'ébullition de la solution de type sol-gel présentée en tant qu'exemple, comprenant un mélange de butanol et d'éthanol et un précurseur de zirconium, étant supérieure à 90°C, la température du gaz choisi, de l'azote, en sortie du réchauffeur est fixée à 90°C, afin de ne pas avoir de phénomène d'ébullition au sein de l'ébauche carbonée lors de la mise en œuvre du procédé de séchage.

La durée nécessaire à la gélification du sol présent dans l'ébauche carbonée est évaluée à 4h pour une température de 80°C, autrement dit, afin d'obtenir un matériau sans gradient de distribution de charges toutes les pièces présentes dans l'équipement industriel doivent être exposées, par exemple, à 80°C durant 4h, avec le minimum d'évaporation de solvant. D'autres points de fonctionnement peuvent être observés sur le graphique de la figure 5 : (85°C, 2h), (75°C, 6h), (70°C, 11h), (65°C, 22h), toujours avec des taux d'évaporation des plus faibles possibles.

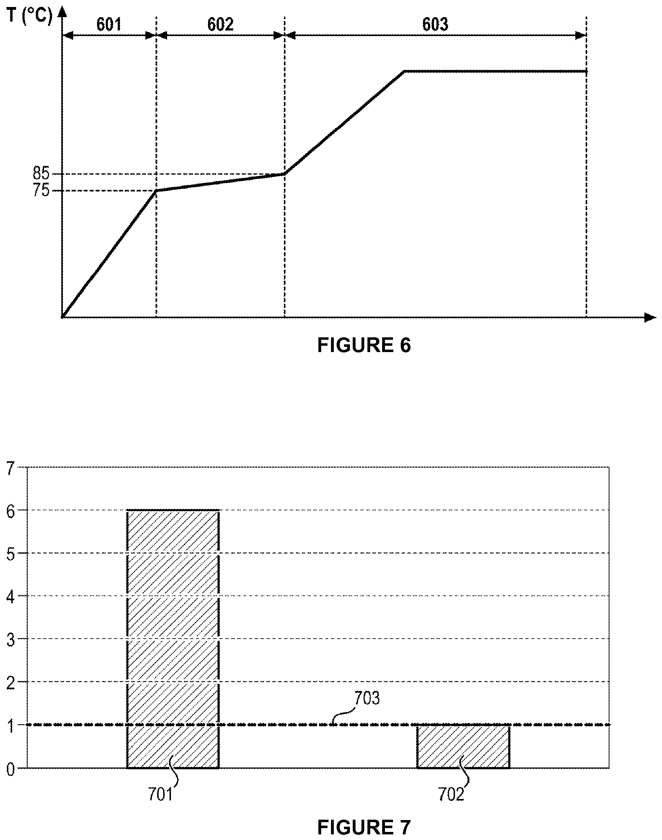

En référence à la figure 6, l'évolution de la température en °C en fonction du temps lors du procédé de séchage est représentée. Le segment 601 correspond à l'étape de montée en température 201, au cours de laquelle des calories sont apportées par les premier et deuxième moyens de chauffages en saturant l'azote jusqu'à atteindre un premier seuil de température, par exemple 75°C, par exemple au niveau du deuxième capteur de température 125. Le segment 602 correspond à l'étape de gélification 203. Le segment 603 correspond à l'étape de séchage 205.

En référence à la figue 7 est représenté sous forme d'histogramme l'impact du procédé de séchage séquencé selon l'invention par rapport au séchage continu de l'art antérieur.

Un ratio R est calculé, R étant le rapport entre la quantité de charges présentes en surface d'une ébauche, sur une épaisseur de 5mm, et la quantité de charges présentes à cœur, également sur une épaisseur de 5 mm.

Le rectangle 701 représente le ratio R pour l'art antérieur, dans le cadre d'un cycle de séchage continu, avec une température suivant le premier capteur de température à 75°C, la vanne de régulation partiellement ouverte, et les ventilateur et réchauffeur activés. Le matériau présente alors un gradient de distribution de charges. Le rapport R moyen à 6 démontre qu'il existe une quantité de charges 6 fois supérieure en face frottante qu'à cœur.

Le rectangle 702 représente le ratio R pour le procédé de séchage présenté ici, dans le cadre d'un cycle de séchage séquencé. Le matériau ne présente pas de gradient de distribution de charges : en effet, le rapport R moyen à 0,96 démontre qu'il existe la même quantité de charges de précurseur de céramique à cœur qu'en surface.

La ligne interrompue 703 désigne le ratio R cible de 1 sans gradient de charges.

La méthode d'obtention des tels ratios R comprend un échantillonnage. Pour ce faire, des prélèvements sont réalisés sur des cylindres de composite de dimensions 36mm de diamètre et d'épaisseur 5mm. Le gaz est de l'azote. L'imprégnation comprend un mélange d'éthanol et de butanol comme solvant et un précurseur d'oxyde de zirconium. 3 éprouvettes par zone sont prélevées à différentes épaisseurs dans le matériau :

- une première à 3 mm de la face frottante brute supérieure,
- une deuxième à 3 mm de la face frottante brute inférieure, et
- une troisième à cœur du matériau.

La méthode d'obtention des tels ratios R comprend ensuite une détermination des ratios. Les 3 prélèvement sont oxydés à 1000°C durant 15 heures afin de retirer la partie carbonée composée par le renfort fibreux et par la matrice pyrocarbone. À l'issue de cette phase d'oxydation, le résidu solide (communément appelé « cendres ») récupéré est composé de charges de zirconium totalement oxydées sous forme de $ZrO_2$ ou zircone. Cette quantité de zircone récupérée (quelques dizaines de mg) est alors directement reliée à la quantité de charges présentes dans le prélèvement.

Le taux de cendres après oxydation est calculé pour chacune des éprouvettes rapportant la masse de cendres récupérées à la masse initiale de l'éprouvette selon la formule suivante :

$$\sigma = m_{cendres} / m_{éprouvette}$$

où $\sigma$ est le taux de centres, $m_{cendres}$ est la masse de cendres obtenues à l'issue de l'oxydation, et $m_{éprouvette}$ est la masse de l'éprouvette avant oxydation.

Le rapport R peut ensuite être calculé comme étant le rapport entre le taux de cendres de l'éprouvette prélevée à cœur et le taux de cendres d'une des 2 éprouvettes prélevées en face frottante : de fait 2 rapports R peuvent être calculés par triplet d'éprouvette.

## Revendications

1. Procédé de séchage d'une ébauche (15) de pièce à base de matériau composite carbone/carbone imprégnée d'une solution de type sol-gel, la solution comprenant un solvant et un ou plusieurs composés, dans un système (10) formant étuve, le système comprenant :

    - une chambre (11) configurée pour recevoir l'ébauche,
    - des moyens de circulation (12) de gaz configurés pour permettre de manière sélective la circulation d'un gaz entre une sortie (111) de gaz de la chambre et une entrée (112) de gaz de la chambre,
    - des moyens de désaturation (13) de gaz étant configurés pour permettre de manière sélective la désaturation au moins partielle du gaz en solvant,

le procédé comprenant des étapes de :

- gélification (203) de la solution de sorte à former un gel au sein de l'ébauche disposée dans la chambre par chauffage de la chambre, les moyens de circulation et les moyens de désaturation étant désactivés, de sorte à limiter la circulation et la désaturation du gaz en solvant, et
- séchage (205) du gel au sein de l'ébauche par chauffage, les moyens de circulation et les moyens de désaturation étant activés, de sorte à permettre la circulation et la désaturation du gaz en solvant.

**2.** Procédé de séchage selon la revendication 1, comprenant, préalablement à l'étape de gélification, une étape de montée en température (201), les moyens de circulation (12) étant activés et les moyens de désaturation (13) étant désactivés, de sorte à permettre la montée en température en limitant la désaturation du gaz en solvant.

**3.** Procédé de séchage selon la revendication 1 ou 2, la chambre (11) comprenant des moyens de chauffage (113) dédiés, configurés pour chauffer de manière sélective la chambre (11), par exemple indépendamment de l'état des moyens de circulation (12) de gaz, les moyens de chauffage (113) de la chambre étant activés durant les étapes de gélification (203) et de séchage (205), et par exemple activés durant l'étape de montée en température (201), les moyens de chauffage (113) de la chambre comprenant par exemple une double enveloppe (1131) de la chambre.

**4.** Procédé de séchage selon l'une quelconque des revendications précédentes, les moyens de circulation (12) de gaz comprenant des moyens de chauffage (123) dédiés, configurés pour chauffer de manière sélective le gaz circulant entre la sortie (111) de gaz et l'entrée (112) de gaz, les moyens de chauffage (123) des moyens de circulation étant désactivés durant l'étape de gélification (203) et activés durant l'étape de séchage (205), et par exemple activés durant l'étape de montée en température (201).

**5.** Procédé de séchage selon l'une quelconque des revendications précédentes, dans lequel l'étape de séchage (205) comprend une sous-étape de montée en température (2051) et une sous-étape postérieure de maintien en température (2053), l'étape de séchage étant par exemple suivie d'une étape de refroidissement (207) dans laquelle les moyens de circulation (12) sont activés, et par exemple les moyens de chauffage (113) de la chambre et/ou les moyens de chauffage (123) des moyens de circulations, sont désactivés, et par exemple les moyens de désaturation (13) sont activés.

**6.** Procédé de séchage selon l'une quelconque des revendications précédentes, dans lequel les moyens de circulation (12) de gaz comprennent un circuit de circulation (121) de gaz s'étendant entre la sortie (111) de gaz et l'entrée (112) de gaz, le circuit de circulation (121) comprenant un ventilateur (122) configuré pour permettre de manière sélective la circulation d'un gaz entre la sortie (111) de gaz de la chambre et l'entrée (112) de gaz de la chambre, les moyens de chauffage (123) des moyens de circulation comprenant par exemple un réchauffeur configuré pour réchauffer le gaz circulant au sein des moyens de circulation, le réchauffeur étant par exemple disposés entre le ventilateur et l'entrée de gaz.

**7.** Procédé de séchage selon l'une quelconque des revendications précédentes, dans lequel les moyens de désaturation (13) de gaz comprennent un circuit de désaturation (134) de gaz comprenant :

- une vanne (133) configurée pour permettre de manière sélective la circulation du gaz au sein du circuit de désaturation de gaz, et
- un condenseur (136) configuré pour permettre la condensation du solvant présent au sein du gaz circulant au sein du circuit de désaturation de gaz, et la fourniture de gaz désaturée par le circuit de désaturation de gaz.

**8.** Procédé de séchage selon les revendications 6 et 7, dans lequel le circuit de désaturation (131) de gaz est connecté fluidiquement à la chambre (11) via le circuit de circulation (121) de gaz, le circuit de désaturation de gaz comprenant par exemple une entrée (134) et une sortie (135) dédiées, l'entrée du circuit de désaturation de gaz étant disposée en amont de la sortie du circuit de désaturation de gaz au niveau du circuit de circulation de gaz de sorte à former une dérivation, l'entrée et la sortie du circuit de désaturation de gaz étant par exemple disposées en amont du ventilateur (122) et/ou du réchauffeur (123).

**9.** Procédé de fabrication d'une pièce à base de matériau composite carbone/carbone comprenant des étapes de :

- fourniture ou obtention (301) d'une ébauche (15) de pièce à base de matériau composite carbone/carbone imprégnée d'une solution de type sol-gel au sein d'un système (1) formant étuve, et

- séchage (303) de l'ébauche comprenant le procédé de séchage selon l'une quelconque des revendications précédentes.

**Patentansprüche**

1. Verfahren zum Trocknen eines Rohlings (15) eines Bauteils auf der Basis eines Kohlenstoff/Kohlenstoff-Verbundwerkstoffs, imprägniert mit einer Sol-Gel-artigen Lösung, wobei die Lösung ein Lösungsmittel und eine oder mehrere Verbindungen umfasst, in einem System (10), das einen Trockenschrank bildet, wobei das System umfasst:

   - eine Kammer (11), die dafür konfiguriert ist, den Rohling aufzunehmen,
   - Gaszirkulationsmittel (12), die dafür konfiguriert sind, selektiv die Zirkulation eines Gases zwischen einem Gasauslass (111) der Kammer und einem Gaseinlass (112) der Kammer zu ermöglichen,
   - Gasentsättigungsmittel (13), die dafür konfiguriert sind, selektiv die zumindest teilweise Entsättigung des Gases an Lösungsmittel zu ermöglichen,

   wobei das Verfahren Schritte umfasst von:

   - Gelierung (203) der Lösung, sodass ein Gel innerhalb des in der Kammer angeordneten Rohlings durch Erwärmen der Kammer gebildet wird, wobei die Zirkulationsmittel und die Entsättigungsmittel deaktiviert sind, um die Zirkulation und die Entsättigung des Gases an Lösungsmittel zu begrenzen, und
   - Trocknung (205) des Gels innerhalb des Rohlings durch Erwärmen, wobei die Zirkulationsmittel und die Entsättigungsmittel aktiviert sind, um die Zirkulation und die Entsättigung des Gases an Lösungsmittel zu ermöglichen.44

2. Trocknungsverfahren nach Anspruch 1, umfassend, vor dem Schritt der Gelierung, einen Schritt des Temperaturanstiegs (201), wobei die Zirkulationsmittel (12) aktiviert und die Entsättigungsmittel (13) deaktiviert sind, sodass der Temperaturanstieg ermöglicht wird, während die Entsättigung des Gases an Lösungsmittel begrenzt wird.

3. Trocknungsverfahren nach Anspruch 1 oder 2, wobei die Kammer (11) spezifische Heizmittel (113) umfasst, die dafür konfiguriert sind, selektiv die Kammer (11) zu erwärmen, beispielsweise unabhängig vom Zustand der Gaszirkulationsmittel (12), wobei die Heizmittel (113) der Kammer während der Schritte der Gelierung (203) und der Trocknung (205) aktiviert sind und beispielsweise während des Schritts des Temperaturanstiegs (201) aktiviert sind, wobei die Heizmittel (113) der Kammer beispielsweise eine Doppelwandung (1131) der Kammer umfassen.

4. Trocknungsverfahren nach einem der vorhergehenden Ansprüche, wobei die Gaszirkulationsmittel (12) spezifische Heizmittel (123) umfassen, die dafür konfiguriert sind, selektiv das Gas zu erwärmen, das zwischen dem Gasauslass (111) und dem Gaseinlass (112) zirkuliert, wobei die Heizmittel (123) der Zirkulationsmittel während des Schritts der Gelierung (203) deaktiviert und während des Schritts der Trocknung (205) aktiviert sind und beispielsweise während des Schritts des Temperaturanstiegs (201) aktiviert sind.

5. Trocknungsverfahren nach einem der vorhergehenden Ansprüche, wobei der Schritt der Trocknung (205) einen Unter-Schritt des Temperaturanstiegs (2051) und einen nachfolgenden Unter-Schritt des Temperaturhaltens (2053) umfasst, wobei der Schritt der Trocknung beispielsweise gefolgt ist von einem Schritt des Abkühlens (207), in welchem die Zirkulationsmittel (12) aktiviert sind und beispielsweise die Heizmittel (113) der Kammer und/oder die Heizmittel (123) der Zirkulationsmittel deaktiviert sind und beispielsweise die Entsättigungsmittel (13) aktiviert sind.

6. Trocknungsverfahren nach einem der vorhergehenden Ansprüche, wobei die Gaszirkulationsmittel (12) einen Gaszirkulationskreislauf (121) umfassen, der sich zwischen dem Gasauslass (111) und dem Gaseinlass (112) erstreckt, wobei der Zirkulationskreislauf (121) einen Ventilator (122) umfasst, der dafür konfiguriert ist, selektiv die Zirkulation eines Gases zwischen dem Gasauslass (111) der Kammer und dem Gaseinlass (112) der Kammer zu ermöglichen, wobei die Heizmittel (123) der Zirkulationsmittel beispielsweise einen Heizer umfassen, der dafür konfiguriert ist, das innerhalb der Zirkulationsmittel zirkulierende Gas zu erwärmen, wobei der Heizer beispielsweise zwischen dem Ventilator und dem Gaseinlass angeordnet ist.

7. Trocknungsverfahren nach einem der vorhergehenden Ansprüche, wobei die Gasentsättigungsmittel (13) einen Gasentsättigungskreislauf (134) umfassen, der umfasst:

   - ein Ventil (133), das dafür konfiguriert ist, selektiv die Zirkulation des Gases innerhalb des Gasentsättigungskreislaufs zu ermöglichen, und
   - einen Kondensator (136), der dafür konfiguriert ist, die Kondensation des innerhalb des Gasentsättigungskreislaufs zirkulierenden Lösungsmittels zu ermöglichen und die Bereitstellung entsättigten Gases durch den Gasentsättigungskreislauf zu gewährleisten.

8. Trocknungsverfahren nach den Ansprüchen 6 und 7, wobei der Gasentsättigungskreislauf (131) fluidisch mit der Kammer (11) über den Gaszirkulationskreislauf (121) verbunden ist, wobei der Gasentsättigungskreislauf beispielsweise einen spezifischen Einlass (134) und einen spezifischen Auslass (135) umfasst, wobei der Einlass des Gasentsättigungskreislaufs stromaufwärts des Auslasses des Gasentsättigungskreislaufs auf Höhe des Gaszirkulationskreislaufs angeordnet ist, sodass eine Abzweigung gebildet wird, wobei der Einlass und der Auslass des Gasentsättigungskreislaufs beispielsweise stromaufwärts des Ventilators (122) und/oder des Heizers (123) angeordnet sind.

9. Verfahren zur Herstellung eines Bauteils auf der Basis eines Kohlenstoff/Kohlenstoff-Verbundwerkstoffs, umfassend Schritte von:

- Bereitstellung oder Erhalt (301) eines Rohlings (15) eines Bauteils auf der Basis eines Kohlenstoff/Kohlenstoff-Verbundwerkstoffs, imprägniert mit einer Sol-Gel-artigen Lösung innerhalb eines Systems (1), das einen Trockenschrank bildet, und
- Trocknung (303) des Rohlings, umfassend das Trocknungsverfahren nach einem der vorhergehenden Ansprüche.

**Claims**

1. A method for drying a blank (15) of a part made of a carbon/carbon composite material impregnated with a sol-gel solution, the solution comprising a solvent and one or more compounds, in a system (10) forming an oven, the system comprising:

- a chamber (11) configured to receive the blank,
- gas circulation means (12) configured to selectively enable a gas to be circulated between a gas outlet (111) of the chamber and a gas inlet (112) of the chamber,
- gas desaturation means (13) being configured to selectively enable at least partial desaturation of the gas in a solvent,

the method comprising steps of :

- gelling (203) the solution so as to form a gel within the blank disposed in the chamber by heating the chamber, the circulation means and the desaturation means being deactivated, so as to restrict circulation and desaturation of the gas in a solvent, and
- drying (205) the gel within the blank by heating, the circulation means and the desaturation means being activated, so as to enable circulation and desaturation of the gas in a solvent.

2. The drying method according to claim 1, comprising, prior to the gelation step, a temperature rise step (201), the circulation means (12) being activated and the desaturation means (13) being deactivated, so as to allow the temperature rise by restricting the desaturation of the gas in a solvent.

3. The drying method according to claim 1 or 2, the chamber (11) comprising dedicated heating means (113), configured to selectively heat the chamber (11), for example independently of the state of the gas circulation means (12), the means (113) for heating the chamber being activated during the gelation (203) and drying (205) steps, and for example activated during the temperature rise step (201), the means (113) for heating the chamber comprising for example a double envelope (1131) of the chamber.

4. The drying method according to any one of the preceding claims, the gas circulation means (12) comprising dedicated heating means (123), configured to selectively heat the gas circulating between the gas outlet (111) and the gas inlet (112), the means (123) for heating the circulation means being deactivated during the gelation step (203) and activated during the drying step (205), and for example activated during the temperature rise step (201).

5. The drying method according to any one of the preceding claims, wherein the drying step (205) comprises a temperature rise sub-step (2051) and a subsequent temperature maintenance sub-step (2053), the drying step being for example followed by a cooling step (207) in which the circulation means (12) are activated, and for example the means (113) for heating the chamber and/or the means (123) for heating the circulation means, are deactivated, and for example the desaturation means (13) are activated.

6. The drying method according to any one of the preceding claims, wherein the gas circulation means (12) comprise a gas circulation circuit (121) extending between the gas outlet (111) and the gas inlet (112), the circulation circuit (121) comprising a fan (122) configured to selectively enable a gas to be circulated between the gas outlet (111) of the chamber and the gas inlet (112) of the chamber, the means (123) for heating the circulation means comprising for example a heater configured to heat the gas circulating within the circulation means, the heater being for example disposed between the fan and the gas inlet.

7. The drying method according to any one of the preceding claims, wherein the gas desaturation means (13) comprise a gas desaturation circuit (134) comprising:

    - a valve (133) configured to selectively enable the gas to be circulated within the gas desaturation circuit, and
    - a condenser (136) configured to allow the condensation of the solvent present within the gas circulating within the gas desaturation circuit, and the supply of desaturated gas by the gas desaturation circuit.

8. The drying method according to claims 6 and 7, wherein the gas desaturation circuit (131) is fluidly connected to the chamber (11) via the gas circulation circuit (121), the gas desaturation circuit comprising for example a dedicated inlet (134) and outlet (135), the inlet of the gas desaturation circuit being disposed upstream of the outlet of the gas desaturation circuit at the gas circulation circuit so as to form a bypass, the inlet and the outlet of the gas desaturation circuit being for example disposed upstream of the fan (122) and/or of the heater (123).

9. A method for manufacturing a part made of a carbon/carbon composite material comprising steps of:

    - supplying or obtaining (301) a blank (15) of a part made of a carbon/carbon composite material impregnated with a sol-gel solution within a system (1) forming an oven, and
    - drying (303) the blank comprising the drying method according to any one of the preceding claims.

**FIGURE 1**

FIGURE 2

FIGURE 3

FIGURE 4

FIGURE 5

**FIGURE 6**

**FIGURE 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5792715 A
- US 5904957 A
- US 5389152 A
- US 6376431 B
- WO 2006067184 A
- EP 1748036 A
- EP 0507564 A
- EP 0404571 A
- FR 2945529
- DE 202008013487 U1
- EP 2058613 A2
- FR 2851244 A1